(19) Europäisches Patentamt
European Patent Office
Office européen des brevets

(11) **EP 2 998 608 B1**

(12) **EUROPÄISCHE PATENTSCHRIFT**

(45) Veröffentlichungstag und Bekanntmachung des Hinweises auf die Patenterteilung:
**09.11.2022 Patentblatt 2022/45**

(21) Anmeldenummer: **15002402.4**

(22) Anmeldetag: **13.08.2015**

(51) Internationale Patentklassifikation (IPC):
*F16F 1/10* (2006.01)　　　*F16F 15/121* (2006.01)

(52) Gemeinsame Patentklassifikation (CPC):
**F16F 1/10; F16F 15/1213**

(54) **SPIRALFEDER ZUR DREHMOMENTÜBERTRAGUNG IN EINEM TRIEBSTRANG EINES KRAFTFAHRZEUGS UND ZUR SCHWINGUNGSENTKOPPLUNG UND/ODER DÄMPFUNG VON DREHSCHWINGUNGEN**

COIL SPRING FOR TORQUE TRANSMISSION IN A DRIVETRAIN OF A MOTOR VEHICLE AND FOR VIBRATION DECOUPLING AND/OR DAMPING TORSIONAL VIBRATIONS

RESSORT EN SPIRALE DESTINÉ À LA TRANSMISSION DE COUPLE DANS UN ENTRAÎNEMENT DE VÉHICULE AUTOMOBILE ET AU DECOUPLAGE PAR OSCILLATIONS ET/OU À L'AMORTISSEMENT DE VIBRATIONS TORSIONNELLES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.09.2014 DE 102014013940**

(43) Veröffentlichungstag der Anmeldung:
**23.03.2016 Patentblatt 2016/12**

(73) Patentinhaber: **MAN Truck & Bus SE**
**80995 München (DE)**

(72) Erfinder:
• **TÜRK, Jens**
**92353 Postbauer-Heng (DE)**
• **PHAM, Haison**
**52222 Stolberg (DE)**

(74) Vertreter: **v. Bezold & Partner Patentanwälte - PartG mbB**
**Ridlerstraße 57**
**80339 München (DE)**

(56) Entgegenhaltungen:
**DE-A1- 3 809 008　　DE-A1-102010 007 590**
**DE-C- 848 456　　　GB-A- 1 404 047**
**US-A- 1 127 154**

**Beschreibung**

Die Erfindung betrifft ein Modul mit einer Spiralfeder für einen Triebstrang eines Kraftfahrzeugs, insbesondere eines Nutzfahrzeugs, vorzugsweise eines Lastkraftwagens oder eines Omnibusses. Die Spiralfeder dient insbesondere zur Drehmomentübertragung und zur Schwingungsentkopplung und/oder Dämpfung von Drehschwingungen.

Im Stand der Technik sind Vorrichtungen zur Drehmomentübertragung und zur Schwingungsentkopplung und Dämpfung von Drehschwingungen in Triebsträngen von Nutzfahrzeugen bekannt. Zurzeit sind folgende Vorrichtungen zur Schwingungsdämpfung und/oder -entkopplung üblich: Die Schwingungen können über mehrere Elastomerelemente in einem vorgespannten Zustand gedämpft/entkoppelt werden. Dabei wird einerseits ein Antriebsmoment z. B. für eine Kühlmittelpumpe sicher übertragen und andererseits über die Steifigkeiten und die innere Dämpfungswirkung des Elastomers eine Reduktion der aus dem motorischen Prozess indizierten Drehmomentspitzen erreicht. Im Betrieb werden die Elastomerelemente durch eine Relativbewegung gestaucht und entlastet und darüber hinaus ungünstigen Umgebungsbedingungen ausgesetzt, z. B. Öl, Öltemperatur, etc. Deshalb neigen die Elastomerelemente dazu, sich derart zu verhärten und zu verformen, dass die Dämpfungswirkung verloren geht. Weitere Ausführungen nehmen die Schwingungen über metallische Dämpfungselemente auf. Dabei kann es sich um Druckfedern handeln, welche als entkoppelndes Element fungieren. Dabei existieren Ausführungen mit zusätzlichen Fliehkraftpendeln, sogenannten Tilgermassen, welche zu den entstehenden Schwingungen gegenphasig schwingen und dadurch einen Schwingungsausgleich (Tilgen) bewirken. Weitere Ausführungen arbeiten mit Blattfederpaketen, durch deren Effekte die Federkennlinie bei größerer Biegung der Blattfedern ansteigt. Diese Blattfederelemente bilden auf Grund der meist begrenzten Bauraumdimensionen ein relativ steif abgestimmtes System. Durch die geschlossene Bauweise des Entkopplers wird eine zusätzliche Dämpfung über eine Dämpfungsflüssigkeit, welche von den Blattfedern innerhalb einer Kammer komprimiert wird, erzielt. Aus der DE 38 09 008 A1 z. B. ist eine Torsionsdämpfungsvorrichtung, insbesondere ein Spiralfederdämpfer für Kfz-Reibungskupplungen/-Bremsen bekannt, mit zwei koaxial angeordneten und um die gleiche Achse rotierbaren und gegeneinander begrenzt verdrehbaren Antriebs- oder Abtriebsteilen und mit mindestens einem Spiralfederarm, dessen inneres Ende am Nabenflansch des Abtriebsteils und dessen äußeres Ende am Antriebsteil befestigt ist. Wesentlich ist dabei, dass der Radial-Querschnitt der Federarme in Abhängigkeit von der sich im Verlauf der Arme verändernden Belastung (Biegemoment) ausgelegt ist, wobei der geringste Querschnitt in der Zwischenzone des Biegemomentwechsels vorgesehen ist. Zum Stand der Technik können ferner die GB 1 404 047 A und die US 1 127 154 A genannt werden.

Eine Aufgabe der Erfindung ist es, eine alternative und/oder verbesserte Möglichkeit zur Drehmomentübertragung und zur Schwingungsentkopplung und/oder Dämpfung von Drehschwingungen in einem Triebstrang eines Kraftfahrzeugs zu schaffen.

Diese Aufgabe wird mit den Merkmalen des unabhängigen Anspruchs 1 gelöst. Vorteilhafte Weiterbildungen der Erfindung können den Unteransprüchen und der folgenden Beschreibung bevorzugter Ausführungsformen der Erfindung entnommen werden.

Die Erfindung schafft eine Spiralfeder zur Drehmomentübertragung und zur Schwingungsentkopplung und/oder Dämpfung von Drehschwingungen, insbesondere zur überkritischen, zumindest nahezu dämpfungsfreien Schwingungsentkopplung.

Die Spiralfeder dient zweckmäßig zum Einsatz in einem Triebstrang (z. B. Antriebsstrang, Nebenantriebsstrang und/oder Nebenabtriebsstrang) eines Kraftfahrzeugs, insbesondere eines Nutzfahrzeugs, z. B. eines Lastkraftwagens oder eines Omnibusses.

Die Spiralfeder zeichnet sich insbesondere dadurch aus, dass ihr (Profil-) Querschnitt (z. B. Höhe und/oder Breite) zumindest abschnittsweise längenabhängig zunimmt, insbesondere steigt, und somit zweckmäßig variiert. Die Höhe der Spiralfeder nimmt von einem inneren Haltemittel bis zu einem äußeren Haltemittel kontinuierlich zu, und/oder die Breite der Spiralfeder nimmt von einem inneren Haltemittel bis zu einem äußeren Haltemittel kontinuierlich zu.

Dadurch kann eine belastungsabhängige und/oder sehr geringe Federsteifigkeit realisiert werden. Das führt insbesondere zu einer sehr geringen Eigenfrequenz im Schwingungssystem und/oder macht eine überkritische Entkopplung zumindest nahezu ohne Dämpfung realisierbar.

"Überkritisch" bedeutet insbesondere, dass die eingeleitete Schwingung in einem schwingfähigen System deutlich höher frequentiert ist als die Eigenfrequenz des Systems. Maßgeblich dafür ist das Verhältnis von Erreger- zu Eigenfrequenz, welches für eine überkritische Auslegung einen Wert von $\sqrt{2}$ nicht unterschreiten sollte, da bei einem Frequenzverhältnis von 1 die sogenannte kritische Resonanzkatastrophe eintritt, bei der die Amplituden der Erregerfrequenz sich mit denen der Eigenfrequenz addieren.

Im Betrieb oder Belastungszustand wird die Spiralfeder (z. B. auf einen Innenring) aufgewickelt, wodurch ihre wirksame Federlänge verkürzt und die Federsteifigkeit verändert wird. Der aufgewickelte Teil der Spiralfeder weist zweckmäßig keine Federwirkung mehr auf. Wirksame Federeigenschaften hat dann nur noch die nicht aufgewickelte Restlänge der Spiralfeder. Die Aufwicklung ist insbesondere vom eingeleiteten Drehmoment und dem zunehmenden Querschnitt der Spiralfeder abhängig.

Die Spiralfeder ist vorzugsweise eine metallische Spiralfeder, so dass eine sichere Übertragung des Drehmoments realisierbar ist und zwar unabhängig von den Temperaturen, denen die Spiralfeder ausgesetzt ist (z. B. Motortemperatur, Öltemperatur, etc.), und den Betriebsstoffen (z. B. Öl).

Es ist möglich, dass der Querschnitt (zweckmäßig Höhe und/oder Breite) der Spiralfeder gleichmäßig und/oder stetig steigend ausgeführt ist, vorzugsweise stufenfrei.

Der Querschnitt (zweckmäßig Höhe und/oder Breite) nimmt vorzugsweise von einem inneren Spiralabschnitt, vorzugsweise einem inneren Spiralende, zu einem äußeren Spiralabschnitt, vorzugsweise einem äußeren Spiralende, zu, insbesondere kontinuierlich zu.

Der Querschnitt (zweckmäßig Höhe und/oder Breite) ist vorzugsweise an einem inneren Spiralende kleiner als an einem äußeren Spiralende, so dass insbesondere ein gezieltes Aufwickeln beginnend am inneren Spiralende bewirkbar ist. Alternativ oder ergänzend kann der Querschnitt (zweckmäßig Höhe und/oder Breite) von einem inneren Spiralende zu einem äußeren Spiralende gleichmäßig und/oder stetig zunehmend ausgeführt sein.

Die Spiralfeder weist folglich zweckmäßig innen einen geringeren Querschnitt (zweckmäßig Höhe und/oder Breite) auf als außen, wodurch insbesondere eine relativ niedrige Eigenfrequenz realisierbar ist, da aus einem geringen Querschnitt (zweckmäßig Höhe und/oder Breite) eine niedrige Federsteifigkeit resultiert. Dadurch lässt sich ein schwingfähiges System zumindest nahezu ohne Dämpfung überkritisch entkoppeln.

Eine Spiralfeder mit einem z. B. konstruktiv relativ kleinen Querschnitt weist durch ihre geringe Federsteifigkeit in einem schwingfähigen System eine entsprechend relativ niedrige Eigenfrequenz auf.

Die Spiralfeder ist vorzugsweise als ebene Spiralfeder ausgeführt, so dass sie vorzugsweise in Normal- oder Querrichtung zur Belastung einen im Wesentlichen konstanten Wert aufweisen kann.

Es ist möglich, dass die Spiralfeder über ihre vorzugsweise gesamte Länge eine konstante Breite aufweist.

Es ist möglich, dass die Spiralfeder über ihre vorzugsweise gesamte Länge eine konstante Höhe aufweist.

Es ist möglich, dass der Querschnitt (zweckmäßig Höhe und/oder Breite) über zumindest nahezu die gesamte Länge der Spiralfeder zunimmt, vorzugsweise über zumindest 90%, 94% oder 96% der Länge der Spiralfeder. Dadurch sind z. B. Ausführungsformen umfasst, in denen die Höhe und/oder Breite der Spiralfeder über die gesamte Länge der Spiralfeder zunimmt, vorzugsweise mit Ausnahme der nachfolgend erwähnten Haltemittel (z. B. Halteflansche), deren Höhe und/oder Breite z. B. abweichend davon ausgeführt sein kann.

Die Spiralfeder kann ein zweckmäßig inneres Haltemittel (z. B. einen nach innen abstehenden Halteflansch) zur Befestigung an einem ersten Teil und/oder ein zweckmäßig äußeres Haltemittel (z. B. einen nach außen abstehenden Halteflansch) zur Befestigung an einem zweiten Teil aufweisen.

Das erste Teil und/oder das zweite Teil kann z. B. einen Ring und/oder eine Stange umfassen, z. B. einen Außenring und einen Innenring, aber auch z. B. eine Ring-Stange- oder Stange-Stange-Kombination.

Es ist möglich, dass der Querschnitt der Spiralfeder vom inneren Haltemittel bis zum äußeren Haltemittel kontinuierlich zunimmt.

Die Spiralfeder ist wie schon zuvor erwähnt vorzugsweise aus einem Metall hergestellt.

Die Erfindung ist nicht auf eine Spiralfeder beschränkt, sondern umfasst auch ein Modul für einen Triebstrang (z. B. Antriebsstrang, Nebenantriebsstrang und/oder Nebenabtriebsstrang) eines Kraftfahrzeugs. Das Modul umfasst ein erstes Teil (z. B. Ring, Innenring oder Stange) und ein zweites Teil (z. B. Ring, Außenring oder Stange) und zumindest eine Spiralfeder wie hierin offenbart, die zwischen dem ersten Teil und dem zweiten Teil angeordnet ist.

Der Ring, insbesondere der Außenring, kann z. B. als Zahnrad, Riemenscheibe, Kettenrad oder Welle ausgeführt sein oder an selbige gekoppelt sein.

Das Modul kann z. B. ausgeführt sein, um konstruktiv zwischen einer Kurbelwelle und einer Kühlmittelpumpe angeordnet zu werden.

Vorzugsweise umfasst das Modul mehrere koaxial angeordnete Spiralfedern.

Die Spiralfedern können hintereinander und/oder in einer gemeinsamen Ebene angeordnet sein.

Denkbar ist auch die konstruktive Verknüpfung der in einer Ebene platzierten Spiralfedern zu einem Bauteil, so dass dieses zusammenhängend ist und mehrere Spiralfedern in sich z. B. über einen Innenring und einen Außenring verbindet.

Die zumindest eine Spiralfeder kann z. B. an das erste Teil und/oder das zweite Teil befestigt und somit zweckmäßig anmontiert sein, um das Modul auszubilden. Allerdings kann die zumindest eine Spiralfeder, das erste Teil und das zweite Teil auch aus einem Stück gefertigt werden, um das Modul auszubilden.

Die Erfindung umfasst außerdem einen Triebstrang (z. B. Antriebsstrang, Nebenantriebsstrang und/oder Nebenabtriebsstrang) für ein Kraftfahrzeug, mit zumindest einem Modul wie hierin offenbart.

Der Triebstrang umfasst vorzugsweise mehrere Module, die in Reihe und/oder parallel geschaltet angeordnet sein können.

Zu erwähnen ist noch, dass die Spiralfeder insbesondere zur Drehmomentübertragung in einem Triebstrang eines Kraftfahrzeugs und zur Schwingungsentkopplung und/oder Dämpfung von Drehschwingungen zweckmäßig zwischen dem ersten Teil (z. B. Ring oder Stange) und dem zweiten Teil (z. B. Ring oder Stange) dient.

Zu erwähnen ist außerdem, dass das hierin erwähnte Kraftfahrzeug vorzugsweise ein Nutzfahrzeug ist, insbesondere ein Lastkraftwagen oder ein Omnibus.

Die zuvor beschriebenen bevorzugten Ausführungsformen und Merkmale der Erfindung sind miteinander kombinierbar. Andere vorteilhafte Weiterbildungen der Erfindung sind in den Unteransprüchen offenbart oder ergeben sich aus der folgenden Beschreibung bevorzugter Ausführungsformen der Erfindung in Verbindung mit den beigefügten Figuren.

Figur 1      zeigt eine Draufsicht auf eine Spiralfeder gemäß einer Ausführungsform der Erfindung,

Figur 2      zeigt eine Schnittansicht entlang Linie A-A aus Figur 1,

Figur 3      zeigt eine Draufsicht auf ein Modul gemäß einer Ausführungsform der Erfindung im unbelasteten Zustand,

Figur 4      zeigt eine Draufsicht auf das Modul der Figur 3 im belasteten Zustand,

Figur 5      zeigt eine perspektivische, explosionsartige Ansicht zweier Module gemäß einer Ausführungsform der Erfindung,

Figur 6      zeigt eine perspektivische Ansicht eines Moduls gemäß einer anderen Ausführungsform der Erfindung,

Figur 7      zeigt eine schematische Ansicht eines Moduls gemäß einer Ausführungsform der Erfindung,

Figur 8      zeigt eine schematische Ansicht eines Moduls gemäß einer anderen Ausführungsform der Erfindung,

Figur 9      zeigt ein Diagramm, das das ansteigende übertragbare Drehmoment einer Spiralfeder gemäß einer Ausführungsform der Erfindung in Abhängigkeit des Verdrehwinkels illustriert,

Figur 10    zeigt ein idealisiertes Campbell-Diagramm, das die Frequenz einer Spiralfeder gemäß einer Ausführungsform der Erfindung in Abhängigkeit der Drehzahl illustriert, und

Figur 11    zeigt eine Draufsicht auf ein Modul gemäß einer Ausführungsform der Erfindung.

Die unter Bezugnahme auf die Figuren beschriebenen Ausführungsformen stimmen teilweise überein, so dass ähnliche oder identische Teile mit dem gleichen Bezugszeichen versehen sind und zu deren Erläuterung auch auf die Beschreibung der anderen Ausführungsformen verwiesen wird, um Wiederholungen zu vermeiden.

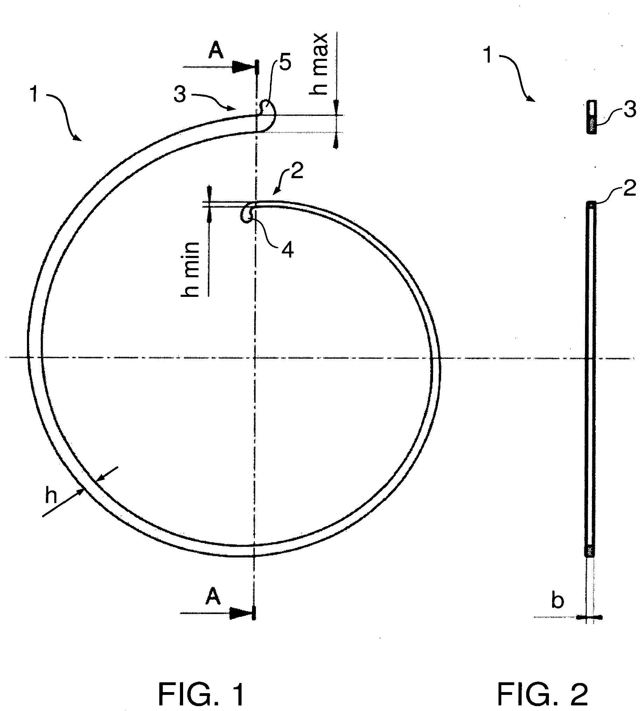

Figur 1 zeigt eine Draufsicht auf eine Spiralfeder 1 gemäß einer Ausführungsform der Erfindung.

Die Spiralfeder 1 ist aus einem Metall gefertigt und dient zur Drehmomentübertragung in einem Triebstrang eines Kraftfahrzeugs und zur Schwingungsentkopplung und/oder Dämpfung von Drehschwingungen.

Die Spiralfeder 1 zeichnet sich durch eine über ihre im Wesentlichen gesamte Länge längenabhängig gleichmäßig, stetig zunehmende und somit steigende Höhe h aus. Die Höhe h nimmt gleichmäßig und stetig von innen nach außen zu, ausgehend von einem inneren Spiralabschnitt (Spiralende) 2 zu einem äußeren Spiralabschnitt (Spiralende) 3. Die Spiralfeder 1 zeichnet sich somit durch einen längenabhängig zunehmenden Profil-Querschnitt aus. Bei einer nicht gezeigten Ausführungsform kann alternativ oder ergänzend zur Höhe h die Breite b der Spiralfeder 1 längenabhängig zunehmen.

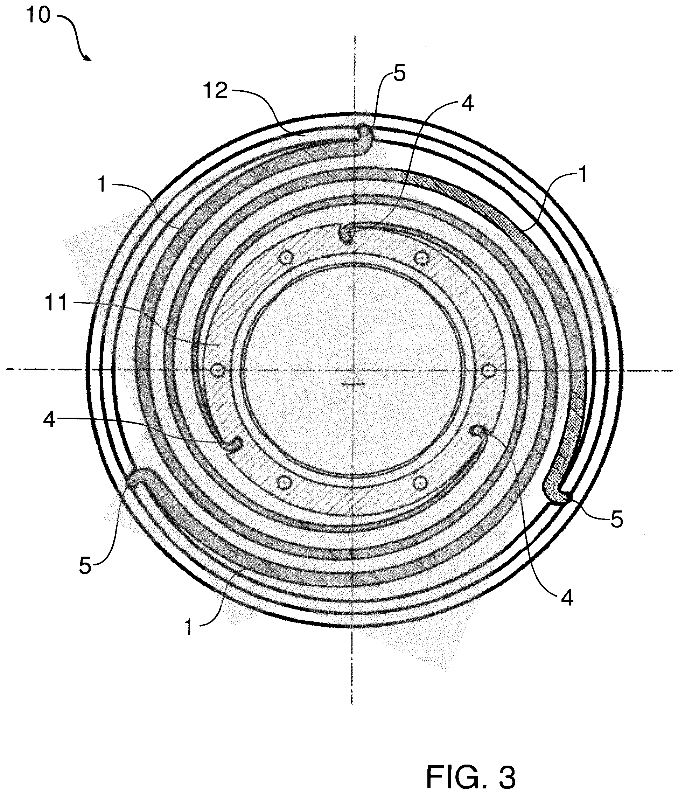

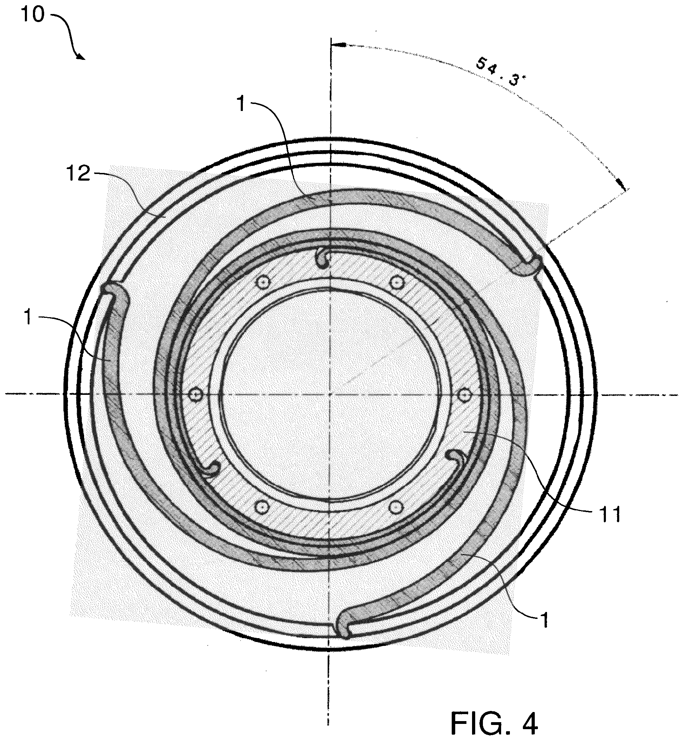

Die Spiralfeder 1 weist einen nach innen abstehenden Halteflansch (Haltemittel) 4 zur Befestigung an einen Innenring (erstes Teil) 11 (z. B. Figuren 3 und 4) und einen nach außen abstehenden Halteflansch (Haltemittel) 5 zur Befestigung an einen Außenring (zweites Teil) 12 (z. B. Figuren 3 und 4) auf. Der nach innen abstehende Halteflansch 4 ist am inneren Spiralende 2 ausgeführt, während der nach außen abstehende Halteflansch 5 am äußeren Spiralende 3 ausgeführt ist. Die Höhe h nimmt zweckmäßig vom Halteflansch 4 bis zum Halteflansch 5 kontinuierlich zu.

Figur 2 zeigt eine Schnittansicht entlang Linie A-A der Figur 1.

Figur 2 kann insbesondere entnommen werden, dass die Spiralfeder 1 als ebene Spiralfeder 1 ausgeführt ist und eine über ihre vorzugsweise gesamte Länge konstante Breite b aufweist.

Figur 3 zeigt eine Draufsicht auf ein Modul 10 für einen Triebstrang eines Kraftfahrzeugs in unbelastetem Zustand.

Das Modul 10 umfasst einen Innenring 11 und einen Außenring 12, zwischen denen drei Spiralfedern 1 koaxial montiert sind.

Figur 4 zeigt das Modul 10 der Figur 3, allerdings in einem belasteten Betriebszustand.

Das zu übertragende Drehmoment führt im Betrieb bzw. im Belastungszustand zum Aufwickeln der Spiralfedern 1 auf dem Innenring 11, wodurch sich die wirksamen Federlängen verändern und die minimal wirksamen Höhen h der Spiralfedern 1 ansteigen. Dadurch vergrößert sich im Betrieb die Federsteifigkeit mit steigendem eingeleitetem Moment. Der aufgewickelte Teil der Spiralfedern 1 weist quasi keine Federwirkung mehr auf. Wirksame Federeigenschaften hat nur noch die nicht aufgewickelte Restlänge der Spiralfedern 1. Die Aufwicklung ist vom eingeleiteten Drehmoment und der ansteigenden Höhe h der Spiralfedern 1 abhängig.

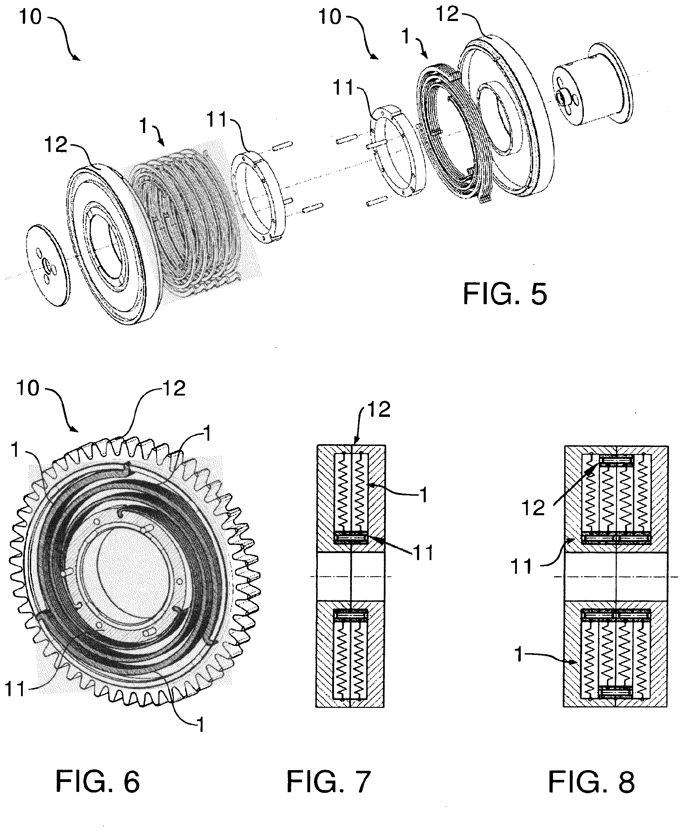

Figur 5 zeigt eine perspektivische, explosionsartige Ansicht zweier Module 10 gemäß einer Ausführungsform der Erfindung.

Figur 5 kann insbesondere entnommen werden, dass es im Rahmen der Erfindung möglich ist, mehrere Module 10 in Reihe geschaltet miteinander zu verkoppeln. Alternativ oder ergänzend können Module 10 parallel geschaltet miteinander verkoppelt werden. Die einzelnen Module 10 können eine Vielzahl an Spiralfedern 1 aufweisen.

Figur 6 zeigt eine perspektivische Ansicht eines Moduls 10 gemäß einer anderen Ausführungsform der Erfindung.

Figur 6 kann z. B. entnommen werden, dass der Außenring 10 z. B. als Zahnrad ausgeführt werden kann.

Figur 7 zeigt eine schematische Ansicht zweier miteinander verkoppelter Module gemäß einer Ausführungsform der Erfindung. Figur 7 zeigt folglich eine Modulanordnung mit zwei Federpaketen.

Figur 8 zeigt eine schematische Ansicht von vier miteinander verkoppelten Modulen gemäß einer Ausführungsform der Erfindung. Figur 8 zeigt folglich eine Modulanordnung mit vier Federpaketen.

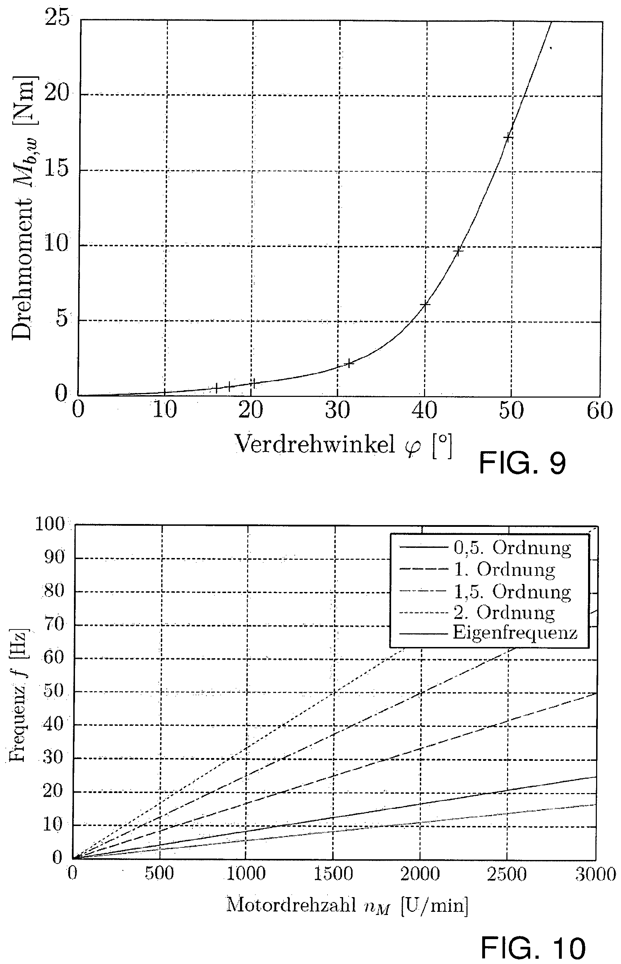

Figur 9 zeigt ein Diagramm mit einem Verdrehwinkel [°] als x-Achse und einem übertragbaren Drehmoment [Nm] als y-Achse einer Spiralfeder 1 gemäß einer Ausführungsform der Erfindung.

Figur 10 zeigt ein idealisiertes Campbell-Diagramm mit einer (Motor-) Drehzahl [U/min] als x-Achse und einer Frequenz [Hz] als y-Achse einer Spiralfeder 1 gemäß einer Ausführungsform der Erfindung.

Zu erwähnen ist, dass die Module 10 in Reihe und/oder parallel geschaltet verwendet werden können, um eine optimierte, insbesondere steigende Gesamtfedersteifigkeit zu realisieren. Die Eigenfrequenz des Moduls 10 oder der Module 10 kann ebenfalls ansteigen, bleibt aber zweckmäßig deutlich unterhalb der Erregerfrequenz aus dem motorischen Prozess (z. B. 0,5; 1 und 2 Ordnung). Dadurch lässt sich das Schwingungssystem überkritisch entkoppeln, zweckmäßig zumindest nahezu dämpfungsfrei.

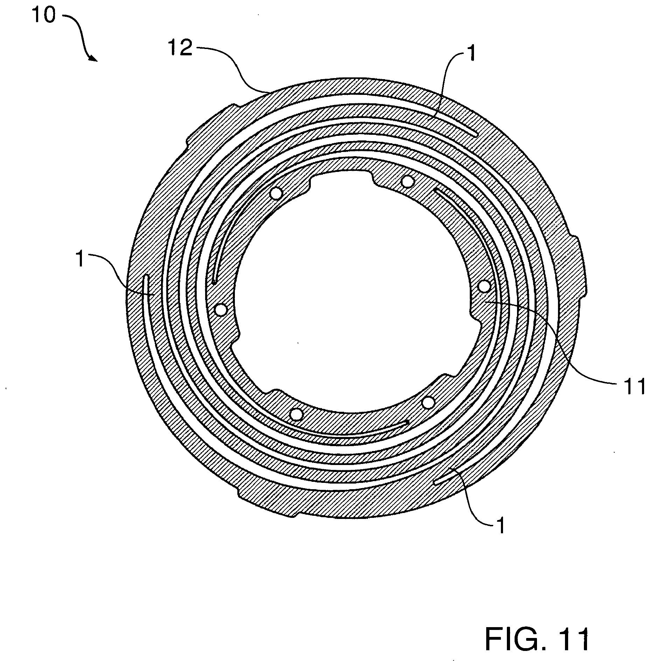

Figur 11 zeigt eine Draufsicht auf ein Modul 10 gemäß einer Ausführungsform der Erfindung.

Figur 11 zeigt ein Modul 10, das mehrere Spiralfedern 1 in einer gemeinsamen Ebene über ein erstes Teil 11 (Innenring) und ein zweites Teil 12 (Außenring) zu einem Bauteil zusammenfasst. Die Spiralfedern 1 sind zwischen dem ersten Teil 11 und dem zweiten Teil 12 angeordnet.

Im Gegensatz zu dem Modul 10 der Figur 4, bei dem die Spiralfedern 1 an das erste Teil 11 und das zweite Teil 12 befestigt und folglich anmontiert sind, sind die Spiralfedern 1, das erste Teil 11 und das zweite Teil 12 der Figur 11 und folglich das Modul 10 der Figur 11 aus einem Stück gefertigt.

Die Spiralfeder(n) 1 weist (weisen) insbesondere die folgenden Vorteile auf:

- reine Entkopplung durch eine vorzugsweise metallische Ausführung statt Dämpfung durch innere Reibung im Elastomer. Daraus folgt, dass eine geringere Wärme durch die Dämpfung und/oder Kopplung entsteht,

- wartungsfrei oder zumindest wartungsarm, da metallische Spiralfeder 1 temperatur- und medienbeständig (z. B. ölbeständig) ist,

- einfache Montage, da Antriebs- und Abtriebsseiten identisch aufgebaut sein können und z. B. nur aufeinander gesteckt werden müssen,

- günstige Herstellung, da Spiralfeder 1 aus Federstahlblech gestanzt, gelasert oder wasserstrahlgeschnitten werden kann,

- durch modulare Modifizierbarkeit kann die Spiralfeder 1 für unterschiedliche Anwendungen variabel verwendet werden, z. B. Variierung der Federanzahl, der Federpakete und/oder der Federmaße.

Die Erfindung ist nicht auf die oben beschriebenen bevorzugten Ausführungsformen beschränkt. Vielmehr ist eine Vielzahl von Varianten und Abwandlungen möglich, die ebenfalls von dem Erfindungsgedanken Gebrauch machen und deshalb in den Schutzbereich fallen. Darüber hinaus beansprucht die Erfindung auch Schutz für den Gegenstand und die Merkmale der Unteransprüche unabhängig von den in Bezug genommenen Merkmalen und Ansprüchen.

## Bezugszeichenliste

| | |
|---|---|
| 1 | Spiralfeder |
| 2 | Innerer Spiralabschnitt |
| 3 | Äußerer Spiralabschnitt |
| 4 | Zweckmäßig inneres Haltemittel, z. B. Halteflansch zur Befestigung an einem Innenring |
| 5 | Zweckmäßig äußeres Haltemittel, z. B. Halteflansch zur Befestigung an einem Außenring |
| 10 | Modul |
| 11 | Erstes Teil, z. B. (Innen-) Ring oder Stange |
| 12 | Zweites Teil, z. B. (Außen-) Ring oder Stange |
| h | Höhe der Spiralfeder |
| b | Breite der Spiralfeder |

## Patentansprüche

1. Modul (10) für einen Triebstrang eines Kraftfahrzeugs, mit einem ersten Teil (11) und einem zweiten Teil (12), wobei zwischen dem ersten Teil (11) und dem zweiten Teil (12) zumindest eine Spiralfeder (1) angeordnet ist, wobei die Spiralfeder (1) zur Drehmomentübertragung in dem Triebstrang und zur Schwingungsentkopplung und/oder Dämpfung von Drehschwingungen ausgebildet ist, wobei die Spiralfeder (1) einen zumindest abschnittsweise längenabhängig zunehmenden Querschnitt aufweist, **dadurch gekennzeichnet, dass**:

a) die Höhe (h) der Spiralfeder (1) von einem inneren Haltemittel (4) bis zu einem äußeren Haltemittel (5) kontinuierlich zunimmt, und/oder
b) die Breite (b) der Spiralfeder (1) von einem inneren Haltemittel (4) bis zu einem äußeren Haltemittel (5) kontinuierlich zunimmt.

2. Modul (10) nach Anspruch 1, **dadurch gekennzeichnet, dass** der Querschnitt gleichmäßig oder stetig zunimmt.

3. Modul (10) nach Anspruch 1 oder 2, **dadurch gekennzeichnet, dass** der Querschnitt von innen nach außen zunimmt, vorzugsweise kontinuierlich.

4. Modul (10) nach einem der vorhergehenden Ansprüche, **dadurch gekennzeichnet, dass** der Querschnitt an einem inneren Spiralende kleiner (2) ist als an einem äußeren Spiralende (3) und/oder von einem inneren Spiralende (2) zu einem äußeren Spiralende (3) gleichmäßig oder stetig zunehmend ausgeführt ist.

5. Modul (10) nach einem der vorhergehenden Ansprüche, **dadurch gekennzeichnet, dass** die Spiralfeder (1) als ebenes Bauteil ausgeführt ist.

6. Modul (10) nach einem der vorhergehenden Ansprüche, **dadurch gekennzeichnet, dass** die Spiralfeder (1) ein Haltemittel (4) zur Befestigung an einem ersten Teil (11) und/oder ein Haltemittel (5) zur Befestigung an einem zweiten Teil (12) aufweist.

7. Modul (10) nach einem der vorhergehenden Ansprüche, **dadurch gekennzeichnet, dass** die Höhe (h) der Spiralfeder (1) und/oder die Breite (b) der Spiralfeder (1) zumindest abschnittsweise längenabhängig zunimmt.

8. Modul (10) nach einem der vorhergehenden Ansprüche, **dadurch gekennzeichnet, dass**

a) die Höhe (h) der Spiralfeder (1) über zumindest nahezu die gesamte Länge der Spiralfeder (1) kontinuierlich zunimmt, und/oder
b) die Breite (b) der Spiralfeder (1) über zumindest nahezu die gesamte Länge der Spiralfeder (1) kontinuierlich zunimmt.

9. Modul (10) nach einem der vorhergehenden Ansprüche, **dadurch gekennzeichnet, dass** die Spiralfeder (1) aus einem Metall hergestellt ist.

10. Modul (10) nach einem der vorhergehenden Ansprüche, **dadurch gekennzeichnet, dass** das Modul (10) mehrere koaxial angeordnete Spiralfedern (1) aufweist.

11. Modul (10) nach einem der vorhergehenden Ansprüche, **dadurch gekennzeichnet, dass** das Modul (10) mehrere hintereinander und/oder mehrere in einer gemeinsamen Ebene angeordnete Spiralfedern (1) aufweist.

12. Modul (10) nach einem der vorhergehenden Ansprüche, **dadurch gekennzeichnet, dass** das erste Teil (11) und/oder das zweite Teil (12) einen Ring und/oder eine Stange umfasst.

13. Triebstrang für ein Kraftfahrzeug, mit zumindest einem Modul (10) nach einem der vorhergehenden Ansprüche.

**Claims**

1. A module (10) for a drive train of a motor vehicle, with a first part (11) and a second part (12), at least one spiral spring (1) being arranged between the first part (11) and the second part (12), the spiral spring (1) being configured for the transmission of torque in the drive train and for vibration decoupling and/or damping of torsional vibrations, the spiral spring (1) having a cross section which increases in a length-dependent manner at least in sections, **characterized in that**:

a) the height (h) of the spiral spring (1) increases continuously from an inner holding means (4) as far as an outer holding means (5), and/or
b) the width (b) of the spiral spring (1) increases continuously from an inner holding means (4) as far as an outer holding means (5).

2. The module (10) according to Claim 1, **characterized in that** the cross section increases uniformly or steadily.

3. The module (10) according to Claim 1 or 2, **characterized in that** the cross section increases from the inside to the outside, preferably continuously.

4. The module (10) according to one of the preceding claims, **characterized in that** the cross section is of smaller configuration at an inner spiral end (2) than at an outer spiral end (3), and/or is configured so as to increase uniformly or steadily from an inner spiral end (2) to an outer spiral end (3).

5. The module (10) according to one of the preceding claims, **characterized in that** the spiral spring (1) is configured as a planar component.

6. The module (10) according to one of the preceding claims, **characterized in that** the spiral spring (1) has a holding means (4) for fastening to a first part (11) and/or a holding means (5) for fastening to a second part (12) .

7. The module (10) according to one of the preceding claims, **characterized in that** the height (h) of the spiral spring (1) and/or the width (b) of the spiral spring (1) increase/increases in a length-dependent manner at least in sections.

8. The module (10) according to one of the preceding claims, **characterized in that**

a) the height (h) of the spiral spring (1) increases continuously over at least approximately the entire length of the spiral spring (1), and/or
b) the width (b) of the spiral spring (1) increases continuously over at least approximately the entire length of the spiral spring (1).

9. The module (10) according to one of the preceding claims, **characterized in that** the spiral spring (1) is produced from a metal.

10. The module (10) according to one of the preceding claims, **characterized in that** the module (10) has a plurality of coaxially arranged spiral springs (1).

11. The module (10) according to one of the preceding claims, **characterized in that** the module (10) has a plurality of spiral springs (1) which are arranged behind one another and/or a plurality of spiral springs (1) which are arranged in a common plane.

12. The module (10) according to one of the preceding claims, **characterized in that** the first part (11) and/or the second part (12) comprise/comprises a ring and/or a rod.

13. A drive train for a motor vehicle, with at least one module (10) according to one of the preceding claims.


**Revendications**

1. Module (10) destiné à une chaîne cinématique d'un véhicule automobile, ledit module comprenant une première partie (11) et une deuxième partie (12), au moins un ressort spiralé (1) étant disposé entre la première partie (11) et la deuxième partie (12), le ressort spiralé (1) étant conçu pour transmettre un couple dans la chaîne cinématique et pour effectuer un découplage des vibrations et/ou amortir des vibrations de torsion, le ressort spiralé (1) ayant une section transversale qui augmente au moins par portions en fonction de la longueur, **caractérisé en ce que** :

a) la hauteur (h) du ressort spiralé (1) augmente de manière continue depuis un moyen de retenue intérieur (4) jusqu'à un moyen de retenue extérieur (5), et/ou
b) la largeur (b) du ressort spiralé (1) augmente de manière continue depuis un moyen de retenue intérieur (4) jusqu'à un moyen de retenue extérieur (5).

2. Module (10) selon la revendication 1, **caractérisé en ce que** la section transversale augmente de manière uniforme ou continue.

3. Module (10) selon la revendication 1 ou 2, **caractérisé en ce que** la section transversale augmente de l'intérieur vers l'extérieur, de préférence de manière continue.

4. Module (10) selon l'une des revendications précédentes, **caractérisé en ce que** la section transversale est plus petite (2) à une extrémité de spirale intérieure qu'à une extrémité de spirale extérieure (3) et/ou est réalisée de manière à augmenter uniformément ou régulièrement d'une extrémité de spirale intérieure (2) à une extrémité de spirale extérieure (3).

5. Module (10) selon l'une des revendications précédentes, **caractérisé en ce que** le ressort spiralé (1) est réalisé sous la forme d'un composant plan.

6. Module (10) selon l'une des revendications précédentes, **caractérisé en ce que** le ressort spiralé (1) comporte un moyen de retenue (4) destiné à être fixé à une première partie (11) et/ou un moyen de retenue (5) destiné à être fixé à une deuxième partie (12).

7. Module (10) selon l'une des revendications précédentes, **caractérisé en ce que** la hauteur (h) du ressort spiralé (1) et/ou la largeur (b) du ressort spiralé (1) augmente au moins par portions en fonction de la longueur.

8. Module (10) selon l'une des revendications précédentes, **caractérisé en ce que**

a) la hauteur (h) du ressort spiralé (1) augmente de manière continue sur au moins presque toute la longueur du ressort spiralé (1), et/ou
b) la largeur (b) du ressort spiralé (1) augmente de manière continue sur au moins presque toute la longueur du ressort spiralé (1).

**9.** Module (10) selon l'une des revendications précédentes, **caractérisé en ce que** le ressort spiralé (1) est réalisé à partir d'un métal.

**10.** Module (10) selon l'une des revendications précédentes, **caractérisé en ce que** le module (10) comporte une pluralité de ressorts spiralés (1) disposés coaxialement.

**11.** Module (10) selon l'une des revendications précédentes, **caractérisé en ce que** le module (10) comporte une pluralité de ressorts spiralés (1) disposés dans un plan commun.

**12.** Module (10) selon l'une des revendications précédentes, **caractérisé en ce que** la première partie (11) et/ou la deuxième partie (12) comprend un anneau et/ou une tige.

**13.** Chaîne cinématique destinée à un véhicule automobile, ladite chaîne cinématique comprenant au moins un module (10) selon l'une des revendications précédentes.

FIG. 1

FIG. 2

FIG. 3

FIG. 4

FIG. 5

FIG. 6 FIG. 7 FIG. 8

FIG. 9

FIG. 10

FIG. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3809008 A1
- GB 1404047 A
- US 1127154 A